# EUROPEAN PATENT APPLICATION

(11) **EP 4 443 144 A1**
(43) Date of publication of application: **09.10.2024**
(21) Application number: 24165832.7
(22) Date of filing: 25.03.2024
(51) Int. Cl.: G01N 21/93, G01N 21/94, G01N 21/84

(54) **DEFECT SAMPLE FOR SURFACE INSPECTION AND METHOD FOR USING THE SAME**

(30) Priority: 27.03.2023 JP 2023050144
(71) Applicant: KONICA MINOLTA, INC., Tokyo 100-7015 (JP)
(72) Inventor: YOSHIDA, Ryuichi, Tokyo, 100-7015 (JP)
(74) Representative: MFG Patentanwälte Meyer-Wildhagen Meggle-Freund Gerhard PartG mbB

(57) **Abstract**

Provided are a defect sample (1) for surface inspection capable of reproducing the same state as that in which a defect exists even in a case where a defect does not exist on an inspection surface (100a), and a method for using the defect sample (1). Provided is a defect sample (1) for surface inspection including a substrate (10) that is flexible and has at least one protruded and/or recessed pseudo defect (11 or 13) formed on a surface thereof. By arranging the defect sample (1) along an inspection surface (100a) of a surface inspection target (100), a state in which a defect exists on the inspection surface (100a) is reproduced.

## Description

### Background

### Technological Field

The present invention relates to a defect sample for surface inspection used for inspecting a protruded defect and/or a recessed defect existing on a coated surface of a product such as an automobile, and a method for using the same.

### Description of the Related art

Commonly, a product is coated on the surface thereof to improve the reliability of the product and to improve the aesthetic impression. At this time, there is a case where a foreign substance such as dust floating in the air is placed on the surface to be coated, and the surface is then coated, so that a protruded coating defect called a lump is generated on the coated surface, and the quality of the product in terms of the aesthetic impression is lowered. In addition, in a case where oil adheres to the surface to be coated, and the surface is then coated, the coating material is not applied, and a recessed defect is generated.

The minimum level of a protruded or recessed defect regarded as a good product in terms of the aesthetic impression is often defined on the basis of the diameter of the defect when the defect is visually observed. It is desirable to keep the environment of the production process clean to make the number of foreign substances zero so as not to generate a protruded or recessed defect. However, in consideration of the countermeasure cost, foreign substances having a certain size or smaller are allowed. Therefore, foreign substances such as mechanical dust and sebum from a human body are generated to some extent. In the production process, a certain protruded or recessed defect is generated due to these foreign substances. The diameter of a defect is determined from the size of the foreign substance, the adhesion amount of the oil, the viscosity of the coating material, and the like. The generated defect is inspected with reference to the standard for a good product according to the grade of the product, and the defect having a size equal to or larger than the standard is repaired.

Surface inspection for such protruded defects and recessed defects on the coated surface has been performed by means of visual observation, but recently, an automatic inspection technique using an inspection device has been proposed.

In this inspection device, while moving the inspection target, the inspection surface of the inspection target is irradiated with strip-like illumination light, and the specular reflection light is captured by a camera to obtain an image. In a case where there is a protruded or recessed defect on the coated surface, the luminance decreases due to its physical shape, a dark part in which the luminance decreases is displayed in a bright part (bright strip-like area) on the image corresponding to the specular reflection light, and this dark part is detected as a defect.

Also, WO 2023/008143 A discloses a reference sample of a coating defect obtained by preparing a substrate having formed on the surface thereof one or a plurality of protruded and/or recessed pseudo defects, and covering at least the pseudo defects and a periphery thereof, to form a coating film layer.

In a case where the inspection device described above is used, adjustment processing called parameter tuning for determining the ease of defect detection is generally performed prior to surface inspection. At present, this adjustment processing is performed in a state where a defect actually exists.

Also, the width and luminance distribution of the bright strip-like area appeared in the image captured by the camera greatly affect the defect detection, and the width and luminance distribution of the bright strip-like area greatly depend on the shape of the inspection surface. In general, for example, in a case where the inspection surface is a convex curved surface, the bright strip-like area is thin and the luminance is high. In a case where the inspection surface is a concave curved surface, and in a case where the camera is located inside the focal point of the concave curved surface, the bright strip-like area is thick and the luminance is low. At the focal point of the concave curved surface, the bright strip-like area width is infinite. In a case where the camera moves outward from the focal point of the concave curved surface, the bright strip-like area becomes thinner and the luminance gets higher.

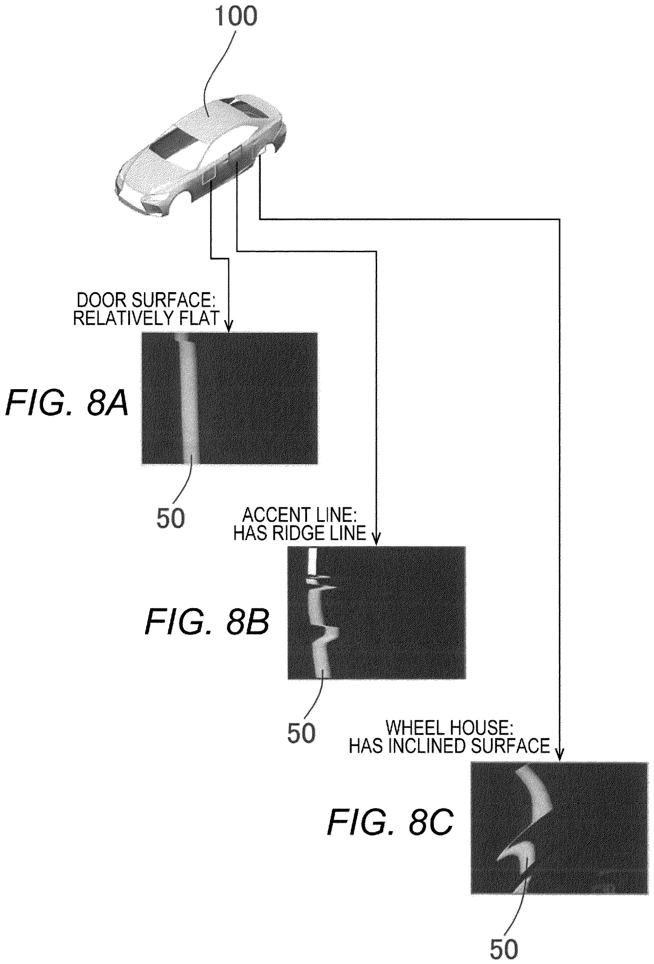

In a case where the inspected surface is a vehicle body surface, the width and luminance distribution of the bright strip-like area are further complicated since the vehicle body surface has a curved surface shape. For example, as illustrated in Fig. 8A, since the door surface of a vehicle body 100 is relatively flat, a bright strip-like area 50 in the image is linear. Since the vicinity of the accent line has a ridge line, the bright strip-like area 50 is distorted as illustrated in Fig. 8B. Since the wheel house part has an inclined surface, the bright strip-like area 50 is similarly distorted as illustrated in Fig. 8C.

For this reason, adjustment processing is required for a wide variety of bright strip-like areas 50 at the respective parts of the inspection surface.

However, it is a rare case where a defect exists at a place for adjustment at the intended time, and sufficient adjustment processing cannot be performed, which is problematic.

In addition, in a case of a surface inspection by means of visual observation, how a defect appears differs depending on how light is applied, the inspection target site, and the like, and it is thus necessary to confirm how the defect appears in each part of the inspection surface. However, in this case as well, it is a rare case where a defect exists at a place for adjustment, and sufficient confirmation cannot be performed, which is problematic.

Note that the above-described problem cannot be solved even by using the reference sample of a coating defect described in WO 2023/008143 A.

### Summary

The present invention has been made in view of such a technical background, and an object of the present invention is to provide a defect sample for surface inspection capable of reproducing the same state as that in which a defect exists even in a case where a defect does not exist on an inspection surface, and to provide a method for using the defect sample.

To achieve the abovementioned object, according to an aspect of the present invention, a defect sample for surface inspection reflecting one aspect of the present invention comprises: a substrate that is flexible and has at least one protruded and/or recessed pseudo defect formed on a surface thereof.

### Brief Description of the Drawings

The advantages and features provided by one or more embodiments of the invention will become more fully understood from the detailed description given hereinbelow and the appended drawings which are given by way of illustration only, and thus are not intended as a definition of the limits of the present invention:
Fig. 1A is a plan view of a substrate in a defect sample according to an embodiment of the present invention, Fig. 1B is a plan view of one pseudo defect formed in the substrate, and Fig. 1C is a cross-sectional view taken along line Ic-Ic in Fig. 1A;
Fig. 2 is a cross-sectional view of the substrate in a flexible and curved state;
Fig. 3 is a cross-sectional view of a state in which a coating film layer is applied to a surface of the pseudo defect;
Fig. 4 is a cross-sectional view for describing a method for manufacturing the defect sample illustrated in Figs. 1A to 3;
Fig. 5 is a cross-sectional view for describing a method for using the defect sample;
Fig. 6 is a cross-sectional view of the defect sample according to another embodiment of the present invention;
Fig. 7 is a cross-sectional view illustrating another example of the pseudo defect; and
Figs. 8A to 8C are explanatory diagrams illustrating that, when the inspection surface is irradiated with strip-like illumination light of a surface inspection device and is captured by a camera, the illumination light in the image is distorted.

### Detailed Description of Embodiments

Hereinafter, one or more embodiments of the present invention will be described with reference to the drawings. However, the scope of the invention is not limited to the disclosed embodiments. In the present embodiment, a case where a surface inspection target is a vehicle body of an automobile and a defect sample is used for surface inspection of the vehicle body will be described.

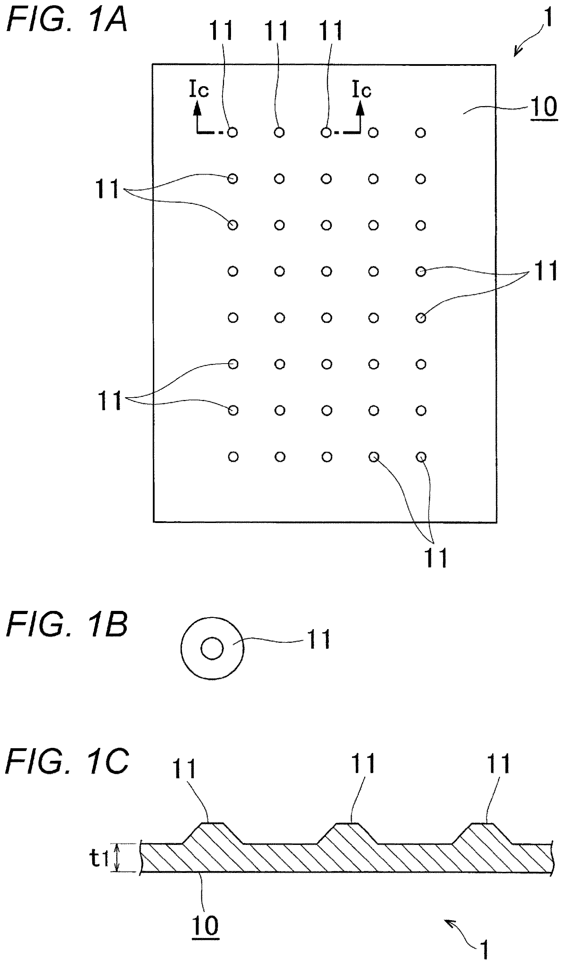

Fig. 1A is a plan view of a defect sample 1 according to an embodiment of the present invention, Fig. 1B is a plan view of one pseudo defect 11 formed in the defect sample 1, and Fig. 1C is a cross-sectional view taken along line Ic-Ic.

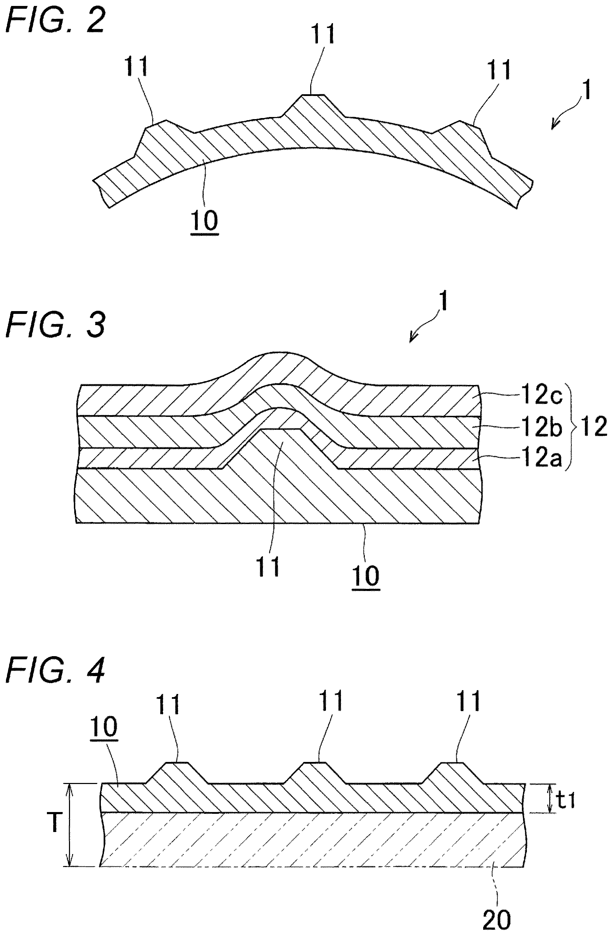

The defect sample 1 illustrated in Figs. 1A to 1C includes a substrate 10 made of a urethane material (elastic modulus: 2000 MPa), and has a size of, for example, about 300 mm in length × 200 mm in width. A thickness t1 of the substrate is about 0.5 mm. Since the substrate 10 is formed to be thin in this manner, the substrate 10 has flexibility so as to be deformable into an arc shape or the like as illustrated in Fig. 2 although the material is urethane.

On one surface of the substrate 10, the plurality of protruded pseudo defects 11 are formed integrally with the substrate 10 and in an aligned state to be away from each other in the length and width directions. As illustrated in Figs. 1B and 1C, the pseudo defect 11 has a truncated conical shape in which the bottom diameter (lower diameter) is larger than the top diameter (upper diameter).

The number of the pseudo defects 11 is not limited, and at least one pseudo defect is only required to be formed. In addition, the shape of the protrusion of the pseudo defect 11 is not limited to the truncated conical shape, and may be a conical shape, a cylindrical shape, a truncated pyramidal shape, a pyramidal shape, a prismatic shape, or the like. However, the truncated conical shape, whose appearance is similar to a protruded defect on a vehicle body of an automobile serving as a surface inspection target, is desirable. Also, in the present embodiment, all the pseudo defects 11 have the same size, but the sizes may be different. The size (diameter) and height of the pseudo defect 11 are not limited, but in a case where the defect sample is used for adjusting an inspection device so that the defect having the minimum size and height to be regarded as a good product can be detected or for performing visual confirmation, the size and height of the pseudo defect 11 are preferably set to the minimum size and height to be regarded as a good product.

The entire surface of the substrate 10 on the side where the pseudo defects 11 are formed illustrated in Figs. 1A to 1C is coated, and as illustrated in Fig. 3, a coating film layer 12 covering one surface of the substrate 10 is formed.

In the present embodiment, the coating film layer 12 has three layers of a primer layer 12a, a base layer 12b, and a clear layer 12c in this order from the side closer to the substrate 10.

The coating film layer 12 is preferably made of the same coating material as that of the vehicle body and preferably has the same layer configuration, color, and thickness as those of the vehicle body from the viewpoint of improving the reproduction accuracy of a defect on the actual vehicle body surface.

However, in a case where the substrate 10 is made of a colorless and transparent material, the coating film layer 12 is not necessarily required. In a case where the substrate 10 is colorless and transparent, the illumination light applied to the substrate 10 is transmitted through the substrate 10 and reflected by the surface of the vehicle body, and the reflected light is further transmitted through the substrate 10 and emitted from the substrate 10, so that the same state as in the case where a defect exists on the surface of the vehicle body is reproduced.

Also, in a case where the substrate 10 is colorless and transparent, it is not necessary to color the substrate 10 and the pseudo defect 11 to conform to the color of the inspection surface of the vehicle body, and even if the color is different for each vehicle body and inspection surface, one defect sample can cope with vehicle bodies and inspection surfaces having different colors.

Next, a method for manufacturing the defect sample 1 illustrated in Figs. 1A to 3 will be described.

First, as illustrated in Fig. 4, a substrate molded body 20 having the pseudo defect 11 on the surface thereof is manufactured. A thickness T of the substrate molded body 20 is preferably about 2 mm, which is a commonly-used thickness, from the viewpoint of the mobility and cost-effectiveness of the material when molding a resin such as urethane.

The pseudo defect 11 may be produced by machining the surface of the substrate molded body 20 using a rotary machine tool (end mill) 3 or the like, or may be formed integrally during resin molding.

Subsequently, the back surface of the substrate molded body 20, which is the opposite surface of the side provided with the pseudo defect 11, is cut by machining until the thickness t1 is about 0.5 mm to manufacture the substrate 10. Note that, the back surface may be machined until the thickness t1 is about 0.5 mm, and the front surface side may then be machined to form the pseudo defect 11. Thereafter, the coating film layer 12 covering the pseudo defect 11 is formed as necessary.

As a method for molding the substrate molded body 20 having the thickness T of about 2 mm, vacuum molding is suitable for small lot production, and injection molding is suitable for large lot production. However, it is difficult to form the substrate 10 having the thickness t1 of about 0.5 mm at the initial stage from the viewpoint of the mobility of the resin. In the case of blow molding, the substrate 10 having a thickness of about 0.5 mm can be molded.

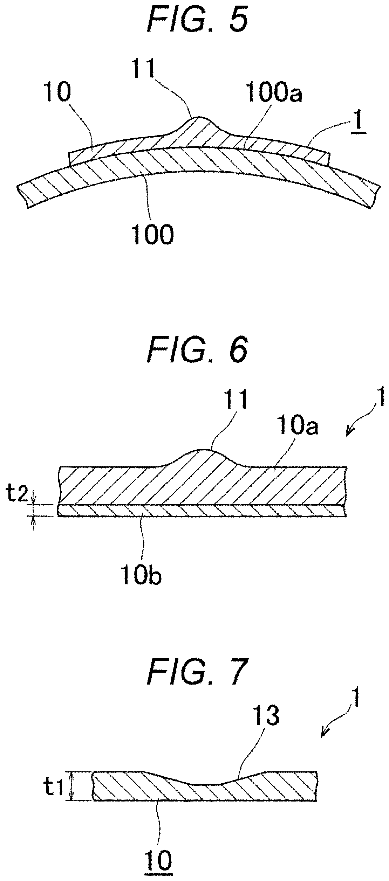

In the present embodiment, since the substrate 10 of the defect sample 1 is formed to be thin with the thickness t1 of about 0.5 mm, it has flexibility. Therefore, as illustrated in Fig. 5, when the substrate 10 is arranged along an inspection surface 100a of a vehicle body 100, the substrate 10 flexibly deforms along the inspection surface 100a even in a case where the inspection surface 100a is a curved surface. Fig. 5 illustrates the defect sample 1 having one pseudo defect 11.

A curvature radius R of the convex or concave curved surface of the vehicle body 100 of the automobile varies depending on the inspection surface 100a. In a case where the curvature radius of the convex curved surface is denoted by -, and the curvature radius of the concave curved surface is denoted by +, 99% of the curvature radii R of the concave curved surfaces is in the range of -∞ to 50 mm, and 98% of the curvature radii R of the convex curved surfaces is in the range of 30 mm to +∞, although this differs depending on the vehicle type.

Based on this, the substrate 10 is preferably deformable along a convex curved surface having the curvature radius R of 30 mm or more or a concave curved surface having the curvature radius R of -30 mm or less, and the urethane substrate 10 having the thickness t1 of 0.5 mm satisfies these conditions.

Next, a method for using the defect sample 1 will be described.

Prior to the surface inspection for determining whether or not there is a defect, the defect sample 1 is arranged on the inspection surface 100a of the vehicle body 100 serving as a surface inspection target. As described above, since the substrate 10 of the defect sample 1 has flexibility, the substrate 10 flexibly deforms along the curved surface of the inspection surface 100a even in a case where the inspection surface 100a is a curved surface. At this time, the corners of the back surface of the substrate 10 are preferably attachable to the inspection surface 100a using a magnet, an adhesive tape, or the like as necessary.

In the arrangement state of the defect sample 1 on the inspection surface 100a, the pseudo defect 11 exists on the surface of the substrate 10. Therefore, the same state as one in which a defect exists on the inspection surface 100a itself is reproduced. In a case where the surface inspection is performed by means of an automatic surface inspection device, the inspection surface 100a is irradiated with strip-like illumination light in this state, the reflection light is captured by a camera, and adjustment processing such as parameter tuning for determining the ease of defect detection is performed. In the case of the surface inspection by means of visual observation, how the defect appears when the illumination light is emitted is confirmed.

When the adjustment processing or the confirmation processing is completed on one inspection surface 100a, similar processing is performed on another inspection surface 100a as necessary. The curvature radius R of the inspection surface 100a varies depending on the location in the vehicle body 100, but the defect sample 1 flexibly deforms along the curved surface of each of most of the inspection surfaces 100a due to the flexibility of the substrate 10, and the same state as one in which a defect exists on the inspection surface 100a itself is reproduced in each of the inspection surfaces 100a.

Next, another embodiment of the present invention will be described. In the present embodiment, the substrate 10 of the defect sample 1 is made of silicon. Since the elastic modulus of silicon is about 1 to 10 MPa, the substrate 10 made of silicon has flexibility regardless of the thickness, and can flexibly conform to the shape of the inspection surface 100a of the vehicle body 100. By using silicon, the pseudo defect 11 is easily formed. In this case as well, the similar coating film layer 12 to that in Fig. 3 is formed on the surface of the pseudo defect 11 as necessary, and is colored in the same color as the color of the inspection surface 100a.

However, since the substrate 10 made of silicon has an excessively low elastic modulus, the substrate 10 is easy to deform but lacks rigidity and is inconvenient to handle. To cope with this, as illustrated in Fig. 6, the back surface of a first member 10a, which is located on the front side of the substrate 10, made of silicon and having the pseudo defect 11, has connected thereto a second member 10b made of resin having a larger elastic modulus than that of silicon of the first member 10a by means of bonding or the like and is reinforced, to form the substrate 10. With such a two-member connecting structure, it is possible to obtain the substrate 10 having appropriate rigidity due to the second member 10b while having the deformability due to the first member 10a, which causes the defect sample 1 to be easy to handle. A thickness t2 of the second member 10b is preferably set to about 0.2 mm so as not to hinder the deformability of the first member 10a due to silicon.

Similarly, in the case where the substrate 10 is formed by connecting the first member 10a to the second member 10b, the coating film layer 12 can be discarded with by forming the first member 10a and the second member 10b with use of a colorless and transparent material.

However, in a case where there is a difference in refractive index between the first member 10a and the second member 10b, light is easily reflected at the connecting surface, which is not preferable. Therefore, in a case where the first member 10a and the second member 10b which are colorless and transparent are used, the difference in refractive index between the first member 10a and the second member 10b is preferably set to 15% or less. In a case where the first member 10a is colorless and transparent silicon, in consideration of the fact that the refractive index of silicon is 1.4, it is preferable to use, as the second member 10b, polypropylene (refractive index: 1.48), acrylic (refractive index: 1.5), polyethylene (refractive index: 1.51), polystyrene (refractive index: 1.58), polycarbonate (refractive index: 1.58), or the like having a larger elastic modulus than that of silicon and appropriate rigidity, and having a difference in refractive index from silicon of 15% or less.

Note that the method for using the defect sample 1 in which the substrate 10 is made of silicon or the defect sample 1 in which the substrate 10 is formed by connecting the first member 10a to the second member 10b is the same as that in the case of the embodiment described in Fig. 5.

That is, the defect sample 1 is arranged on the inspection surface 100a prior to the surface inspection for determining whether or not there is a defect. Since the substrate 10 of the defect sample 1 has flexibility, the substrate 10 flexibly deforms along the curved surface of the inspection surface 100a even in a case where the inspection surface 100a is a curved surface. In this case as well, the corners of the back surface of the substrate 10 are preferably attachable to the inspection surface 100a using a magnet, an adhesive tape, or the like as necessary.

In the arrangement state of the defect sample 1 on the inspection surface 100a, the pseudo defect 11 exists on the surface of the substrate 10. Therefore, the same state as one in which a defect exists on the inspection surface 100a itself is reproduced. In a case where the surface inspection is performed by means of an automatic surface inspection device, the inspection surface 100a is irradiated with illumination light in this state, the reflection light is captured by a camera, and adjustment processing such as parameter tuning for determining the ease of defect detection is performed. In the case of the surface inspection by means of visual observation, how the defect appears when the illumination light is emitted is confirmed.

When the adjustment processing or the confirmation processing is completed on one inspection surface 100a, similar processing is performed on another inspection surface as necessary.

According to an embodiment of the invention, the defect sample for surface inspection is deformable because it is made of a flexible substrate, and thus the sample can be arranged to flexibly conform to a surface shape such as a curved surface of any inspection surface of a surface inspection target such as a vehicle body. Also, since at least one protruded and/or recessed pseudo defect is formed on the surface of the defect sample, by arranging the defect sample along the inspection surface, the same state as one in which a defect exists on the inspection surface can be reproduced. By performing the surface inspection by irradiating the inspection surface with illumination light in this state, adjustment processing such as parameter tuning for determining the ease of defect detection can be performed even in a case where a defect does not actually exist on the inspection surface. Alternatively, how the defect appears can be confirmed by means of visual observation.

In this manner, by deforming and arranging the defect sample at one inspection surface position after another, it is possible to easily and quickly adjust a surface inspection device at any inspection surface position, or to easily and quickly confirm how the defect appears by means of visual observation, even in a case where a defect does not actually exist on the inspection surface.

According to an embodiment of the invention, the substrate is made of a connected body of a first member having the pseudo defect and a second member on a back surface side of the first member, and the first member is made of a material having a smaller elastic modulus than a material which the second member is made of. Accordingly, for example, by forming the first member with use of a material having a smaller elastic modulus such as silicon, it is possible to obtain the defect sample that is easy to handle having the deformability due to the first member for conforming to the inspection surface of the surface inspection target and having appropriate rigidity due to the second member.

According to an embodiment of the invention, since the substrate is colorless and transparent, it is not necessary to color the substrate and the pseudo defect to conform to the color of the inspection surface of the surface inspection target, and even if the color is different for each surface inspection target and inspection surface, one defect sample can cope with surface inspection targets and inspection surfaces having different colors.

According to an embodiment of the invention, the first member and the second member are colorless and transparent, and a difference in refractive index between the first member and the second member is 15% or less. Accordingly, even when the defect sample is irradiated with illumination light, occurrence of large refraction of light at the boundary between the first member and the second member can be prevented. Therefore, it is possible to easily and quickly adjust the surface inspection device at any inspection surface position, or to appropriately confirm how the defect appears by means of visual observation.

According to an embodiment of the invention, the substrate is deformable along a convex curved surface having a curvature radius R of 30 mm or more or a concave curved surface having the curvature radius R of -30 mm or less. Accordingly, the substrate can be used in a wide inspection region of a surface inspection target such as a vehicle body.

Although embodiments of the present invention have been described and illustrated in detail, the disclosed embodiments are made for purposes of illustration and example only and not limitation. The scope of the present invention should be interpreted by terms of the appended claims. For example, although the case where the pseudo defect 11 formed on the surface of the flexible substrate 10 is a protruded pseudo defect has been described, the pseudo defect may be a recessed pseudo defect 13 as illustrated in Fig. 7. In this case, the coating film layer 12 as illustrated in Fig. 3 may be formed by covering the pseudo defect 13, or the substrate 10 itself may be colorless and transparent. In a case where silicon or the like is used as a material for the substrate 10, reinforcement may be performed by attaching a second member for reinforcement to the back surface as in the case illustrated in Fig. 6.

In addition, although the case where the surface inspection target is the vehicle body 100 of an automobile has been described, the present embodiment can be applied to any surface inspection target.

## Claims

1. A defect sample (1) for surface inspection comprising: a substrate (10) that is flexible and has at least one protruded and/or recessed pseudo defect (11, 13) formed on a surface thereof.

2. The defect sample (1) for surface inspection according to claim 1, wherein the substrate (10) is made of a connected body of a first member (10a) having the pseudo defect (11, 13) and a second member (10b) on a back surface side of the first member (10a), and the first member (10a) is made of a material having a smaller elastic modulus than a material which the second member (10b) is made of.

3. The defect sample (1) for surface inspection according to claim 1, wherein the substrate (10) is colorless and transparent.

4. The defect sample (1) for surface inspection according to claim 2, wherein the first member (10a) and the second member (10b) are colorless and transparent, and a difference in refractive index between the first member (10a) and the second member (10b) is 15% or less.

5. The defect sample (1) for surface inspection according to claim 1, wherein the substrate (10) is deformable along a convex curved surface having a curvature radius (R) of 30 mm or more or a concave curved surface having the curvature radius (R) of -30 mm or less.

6. A method for using a defect sample (1), comprising: arranging a defect sample (1) made of a substrate (10) that is flexible and has at least one protruded and/or recessed pseudo defect (11, 13) formed on a surface thereof along an inspection surface (100a) of a surface inspection target (100) to reproduce a state in which a defect exists on the inspection surface (100a).

7. The method for using a defect sample (1) according to claim 6, wherein the substrate (10) is made of a connected body of a first member (10a) having the pseudo defect (11, 13) and a second member (10b) on a back surface side of the first member (10a), and the first member (10a) is made of a material having a smaller elastic modulus than a material which the second member (10b) is made of.

8. The method for using a defect sample (1) according to claim 6, wherein the substrate (10) is a colorless and transparent material.

9. The method for using a defect sample (1) according to claim 7, wherein the first member (10a) and the second member (10b) are colorless and transparent, and a difference in refractive index between the first member (10a) and the second member (10b) is 15% or less.

10. The method for using a defect sample (1) according to claim 7, wherein the inspection surface (100a) of the surface inspection target (100) is a convex curved surface having a curvature radius (R) of 30 mm or more or a concave curved surface having the curvature radius (R) of -30 mm or less, and the substrate (10) is deformable along the convex curved surface or the concave curved surface.
